# EUROPÄISCHE PATENTANMELDUNG

(11) **EP 2 712 171 A2**
(43) Veröffentlichungstag der Anmeldung: **26.03.2014**
(21) Anmeldenummer: 13184693.3
(22) Anmeldetag: 17.09.2013
(51) Int. Cl.: H04N 1/60

(54) **Verfahren und Vorrichtung zur Farbmessung an Druckbildern**

(30) Priorität: 19.09.2012 DE 102012216750
(71) Anmelder: BST International GmbH, 33739 Bielefeld (DE)
(72) Erfinder: Dengler, Percy, 63829 Krombach (DE); Dattner, Michael Dr., 33739 Bielefeld (DE); Wiebe, Michael, 33818 Leopoldshöhe (DE)
(74) Vertreter: Klingseisen, Franz

(57) **Zusammenfassung**

Verfahren zur Farbmessung an einem Druckbild, insbesondere einem auf einer laufenden Druckbahn wiederholt aufgedruckten Druckbild, umfassend eine elektronische Kamera (14) zum Aufnehmen des auf der Druckbahn (11) aufgedruckten Druckbildes (15), eine Speicher- und Recheneinheit (17) zum Bereitstellen von Bezugsdaten der Farbwerte der im Druckbild vorhandenen Farben, wobei die von der Kamera (14) aufgenommenen Daten, insbesondere Helligkeitsdaten, von vorbestimmten Bereichen des Druckbildes (15) in der Recheneinheit mit den gespeicherten Bezugsdaten der Farbwerte dieser Bereiche verglichen bzw. verrechnet werden.

## Beschreibung

Die Erfindung betrifft ein Verfahren und eine Vorrichtung, um die Qualität eines farbigen Druckbildes insbesondere auf einer laufenden Druck- bzw. Materialbahn zu überwachen und gegebenenfalls zu korrigieren, wenn sich im Verlaufe des Druckverfahrens ein Farbwert im Druckbild verändern sollte.

Bei der Farbmessung an Druckbildern wird ein Farbmesskopf, z.B. ein Spektralmesskopf verwendet, der technisch bedingt nicht mehrere relevante Bereiche eines Druckbildes gleichzeitig überprüfen kann Der Messkopf kann nur punktweise eine Druckfarbe an dem Druckbild messen, wobei die Spektraldaten dazu benötigt werden, um eine Farbe im Lab- Farbraum durch ihren Lab-Wert zu definieren, oder die aktuelle Dichte einer Druckfarbe daraus abzuleiten. Spektraldaten einer Farbe, Farbdichte oder Lab-Werte werden im Folgenden (wie auch alle weiteren denkbaren Farbvalenzen) kurz Farbwerte genannt.

Der Erfindung liegt die Aufgabe zugrunde, die Farbmessung so auszubilden, dass möglichst schnell möglichst viele Bereiche eines Druckbildes überprüft und überwacht werden können.

Erfindungsgemäß ist ein Verfahren zur Farbmessung an einem Druckbild vorgesehen, insbesondere einem auf einer laufenden Druckbahn wiederholt aufgedruckten Druckbild, umfassend eine elektronische Kamera zum Aufnehmen des auf der Druckbahn aufgedruckten Druckbildes, eine Speicher- und Recheneinheit zum Bereitstellen von Bezugsdaten der Farbwerte der im Druckbild vorhandenen Farben, wobei die von der Kamera aufgenommenen Daten, insbesondere Helligkeitsdaten, von vorbestimmten Bereichen des Druckbildes in der Recheneinheit mit den gespeicherten Bezugsdaten der Farbwerte dieser Bereiche verglichen und/oder verrechnet werden.

Erfindungsgemäß wird eine elektronische Kamera verwendet, insbesondere eine Zeilenkamera, die ein Druckbild auf einer Druckbahn laufend überwacht, wobei die Kamera insbesondere Helligkeitsveränderungen in vorgegebenen Bezugsflächen des Druckbildes feststellt und Daten des aufgenommenen Druckbildes an eine Recheneinheit liefert, in der die von der Kamera erfassten Daten mit vorgegebenen Farbwerten verglichen und verrechnet werden, um eine Änderung des Farbwertes in der vorgegebenen Bezugsfläche gegenüber dem Bezugswert zu ermitteln

Die Zeilenkamera ist vorzugsweise als Farbkamera ausgebildet, sie kann aber auch als Schwarz-Weiß-Kamera ausgebildet sein.

Die Kamera nimmt fortlaufend Daten der an der Kamera vorbeigeführten Druckbilder auf und stellt sie für eine Verarbeitung in der Recheneinheit zur Verfügung, während die Bezugsdaten der vorgegebenen Bereiche eines Druckbildes in zeitlichen Abständen vom Farbmesskopf erneuert werden.

Vorzugsweise werden als vorgegebene Bereiche bzw. Bezugsflächen in einem Druckbild Bereiche mit Primärfarben verwendet

Die Daten der Kamera werden dazu verwendet, im Falle einer Differenz zwischen den von der Kamera gemessenen Daten und den Bezugsdaten ein Signal zur Anpassung der Druckwerke der Druckmaschine abzugeben.

Die Farbwerte der definierten Bezugsflächen im Druckbild werden vorzugsweise durch einen Farbmesskopf, insbesondere einen Spektralmesskopf, ermittelt.

Der Farbmesskopf erfasst Farbwerte von den vorgegebenen Bereichen des Druckbildes und stellt sie im Speicher der Recheneinheit als Bezugsdaten für den Vergleich bzw die Verrechnung mit den von der Kamera gelieferten Daten bereit.

Unter einem Spektralmesskopf wird ein Farbmessgerät mit der Fähigkeit verstanden, innerhalb des sichtbaren Spektralbereichs von ca 380 bis 780 nm mindestens 9 unterschiedliche Wellenlängen genau zu vermessen.

Der Farbmesskopf generiert die Farbwerte der Bezugsflächen im Druckbild bei einem Druckvorgang möglichst zeitnah Diese vom Farbmesskopf gemessenen Farbwerte der Bezugsflächen werden in der Speicher- und Recheneinheit hinterlegt und für einen Vergleich bzw. eine Verrechnung mit den von der Kamera aufgenommenen Daten des Druckbildes bereitgehalten. Die Kamera nimmt die verschiedenen Bezugsflächen im Druckbild gleichzeitig auf und übermittelt diese Daten an die Speicher- und Recheneinheit, während der Farbmesskopf nur punktuell Farbwerte in den Bezugsflächen des Druckbildes ermitteln bzw messen kann

Die vom Farbmesskopf aufgenommenen Farbwerte und die von der Kamera aufgenommenen Daten des Druckbildes werden nach Zeit und Ort in der Recheneinheit synchronisiert, sodass z.B ein von der Zeilenkamera aufgenommener Bereich eines Druckbildes in Beziehung gesetzt wird mit den vom Farbmesskopf an gleicher Stelle des Druckbildes gemessenen Farbwerten Die Erfassung der Daten an dem gleichen Ort kann zeitlich versetzt durch die Laufstrecke des Druckbildes zwischen Kamera und Farbmesskopf sein Für den Vergleich bzw. die Verrechnung der Daten in der Recheneinheit wird somit sichergestellt, dass jeweils die Daten des gleichen Ortes in Beziehung zueinander gesetzt werden, auch wenn die Erfassung dieser Daten zeitlich versetzt ist zueinander

Für die Erfassung der Daten durch den Farbmesskopf einerseits und die Kamera andererseits reicht an sich ein einzelnes Druckbild auf einer laufenden Druckbahn aus In der Praxis ist es zweckmäßig, etwa fünf Druckbilder für die Messung zu verwenden und daraus einen Mittelwert zu bilden

Die Zeilenkamera liefert ständig neue Daten der aufgenommenen Druckbilder, während der Farbmesskopf unabhängig von den Aufnahmen der Kamera immer wieder in zeitlichen Abständen die Bezugsflächen im Druckbild abtastet und misst, um immer wieder neue Referenzdaten für den Vergleich bzw die Verrechnung mit den Kameradaten bereitzustellen.

Hierbei vergleicht der Farbmesskopf die aufgenommenen Farbwerte mit ursprünglich festgelegten Bezugswerten, sodass eine Veränderung der vom Farbmesskopf aufgenommenen Farbwerte gegenüber ursprünglich festgelegten Bezugs-Farbwerten festgestellt werden kann.

Durch die Recheneinheit werden in einem bestimmten Bereich des Druckbildes bzw. in den definierten Bezugsflächen von der Kamera ermittelten Helligkeitswerte entsprechenden, vom Farbmesskopf gemessenen Farbwerten des gleichen Orts zugeordnet, die im Speicher hinterlegt sind.

Die Kamera stellt im Wesentlichen nur Veränderungen des Intensitäts- bzw. Helligkeitswertes in den Bezugsflächen des Druckbildes fest und meldet diese veränderten Helligkeitswerte an die Steuer- und Recheneinheit, in der die vom Farbmesskopf vorgegebenen Bezugswerte der Farbwerte und damit auch die Helligkeitswerte der vorgegebenen Farben in den vorgegebenen Bereichen gespeichert sind. Aufgrund der von der Kamera gemeldeten Änderung des Helligkeitswerts an einem bestimmten Bereich des Druckbildes kann die Recheneinheit aufgrund der vom Farbmesskopf hinterlegten Daten die Änderung des betreffenden Farbwertes errechnen.

Aufgrund der in der Recheneinheit festgestellten Änderung des Farbwertes in einem bestimmten Bereich des Druckbildes kann ein die betreffende Farbe druckendes Druckwerk am Druckzylinder in ihrer Beistellposition eingestellt werden, um die von der Kamera festgestellte Änderung des Helligkeitswertes und damit die fehlerhafte Farbübertragung zu korrigieren und/oder es kann eine Warnung an den Maschinenführer abgegeben werden.

Eine erfindungsgemäße Vorrichtung zur Farbmessung an einem Druckbild, insbesondere an auf einer laufenden Druckbahn aufgedruckten Druckbildern, umfasst eine elektronische Kamera zur Aufnahme von zumindest Teilbereichen des Druckbildes, einen Farbmesskopf zum punktuellen Messen der Farbwerte von Farben im Druckbild und eine Speicher- und Recheneinheit, die von der Kamera gelieferte Daten des Druckbildes mit im Speicher der Recheneinheit vom Farbmesskopf hinterlegten Farbwerten des Druckbildes vergleicht bzw, verrechnet und durch die örtliche Zuordnung der zu vergleichenden Daten aus den Daten der Kamera, insbesondere Helligkeitsdaten, die zugeordneten Farbwerte errechnet.

Die Erfindung wird beispielsweise anhand der Zeichnung näher erläutert.
- Fig 1: zeigt schematisch in perspektivischer Ansicht einen Ausschnitt einer Druckmaschine mit Kamera und Farbmesskopf, und
- Fig. 2: eine Skizze zur Erläuterung der Ortssynchronisation.

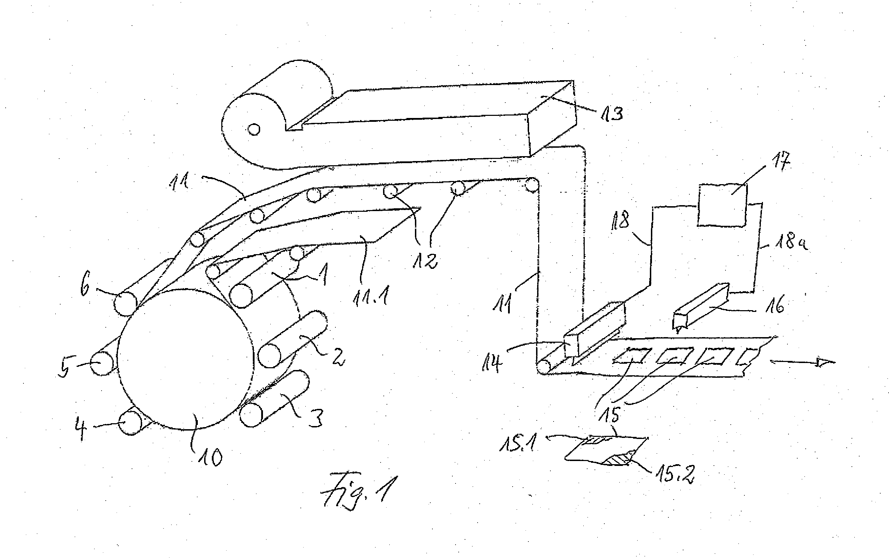

Fig. 1 zeigt in perspektivischer Ansicht einen Druckzylinder 10, um den in vorgegebenen Winkelabständen Druckwerke 1 bis 6 angeordnet sind, wobei jedes Druckwerk eine vorbestimmte Farbe druckt Mit 11 ist eine bei 11 zugeführte Druckbahn bezeichnet, die zwischen den Druckwerken 1 bis 6 und dem Druckzylinder 10 um diesen geführt ist und danach über Rollen 12 unter einem Trockner 13 entlanggeführt wird. Bei 14 ist eine Kamera wiedergegeben, die das von den Farbdruckwerken 1 bis 6 auf der Druckbahn 11 aufgedruckte Druckbild 15 aufzeichnet.

Bei 16 ist schematisch ein Farbmesskopf angedeutet, der vorzugsweise als Spektralmesskopf ausgebildet ist und die auf dem Druckbild 15 aufgebrachten Druckfarben messen kann

Mit 17 ist eine Speicher- und Recheneinheit bezeichnet, in deren Speicher vom Farbmesskopf generierte Farbwerte abgespeichert sind und in der durch eine Vergleichseinrichtung von der Kamera 14 am Druckbild 15 gemessene Werte mit den hinterlegten Daten des Farbmesskopfes verglichen werden können Mit 18 ist eine Verbindungsleitung zwischen der Kamera 14 und der Speicher- und Recheneinheit 17 und mit 18a eine Verbindungsleitung zwischen Farbmesskopf 16 und Recheneinheit 17 bezeichnet

Die Recheneinheit 17 kann Signale an nicht dargestellte Einstelleinrichtungen an den einzelnen Druckwerken 1 bis 6 senden, um die Druckwerke in ihrer Beistellposition relativ zum Druckzylinder 10 bzw relativ zur Druckbahn 11 zu verstellen bzw einzelne Farbzonen eines Farbwerks individuell anzusteuern, um die Qualität des Druckbildes zu optimieren.

Das auf der Druckbahn 11 aufzudruckende Druckbild 15 weist z B. vorgegebene Bereiche bzw. Bezugsflächen 15.1 und 15 2 auf, die in der Fig 1 nur schematisch angedeutet sind.. Jeder dieser Bereiche hat einen bestimmten Farbwert z.B für Rot in 15.1 und Blau in 15.2. Dieser Farbwert der Bereiche 15.1 und 15.2 wird vom Farbmesskopf 16 erfasst und im Speicher hinterlegt bzw vorgegeben. Nach einem Vergleich mit den von der Kamera 14 gemeldeten Daten der Bereiche 15 1 und 15 2 und der daraus errechneten Änderung des zugeordneten Farbwertes werden über die nicht dargestellten Einstelleinrichtungen die entsprechenden Farbwerke 1 bis 6 am Druckzylinder 10 in ihrer Beistellposition gegebenenfalls verstellt bzw angepasst.

Während die Kamera 14 das gesamte Druckbild 15 mit allen Bereichen bzw Bezugsflächen gleichzeitig erfasst, kann der Farbmesskopf nur punktuell an einer Stelle des Druckbildes eine Veränderung des Farbwertes erfassen Es kann somit durch die Verwendung der Kamera 14 eine Vielzahl von Bereichen bzw. Bezugsflächen im Druckbild festgelegt werden, die von der Kamera gleichzeitig überwacht werden und aus deren Daten eine Änderung eines vorgegebenen Farbwertes unmittelbar errechnet werden kann Die zuvor genannten Bereiche 15.1 und 15.2 dienen nur als Beispiel für eine mögliche Vielzahl von solchen Bereichen

Es wird davon ausgegangen, dass sämtliche uberwachte Farbbereiche, die mit einem Farbwerk 1 bis 6 gedruckt werden, nur in der aufgetragenen Schichtdicke der Farbe variieren. Die aufgetragene Schichtdicke korreliert direkt mit der Beistellposition des jeweiligen Druckwerks 1 bis 6 bzw. der Einstellung der jeweiligen Druckzone Aus der Schichtdickenvariation ergibt sich eine Helligkeitsvariation, wobei aus einer Veränderung des Helligkeitswertes auf Basis der hinterlegten Farbwerte die entsprechenden Spektraldaten der betreffenden Farbe errechnet werden können

Für die Korrektur des Farbdrucks reichen somit Helligkeitswerte, die Schichtdicke und die entsprechenden Spektralwerte bzw. die entsprechenden Farbwerte aus

Wenn in dem Druckbild 15 bestimmte Flächen, Druckkontrollstreifen oder ausreichend große homogene Bereiche wie z B 15.1 und 15.2 mit einer bestimmten Farbe vorhanden sind, so wird eine mathematische Korrelation zwischen den von der Kamera 14 erfassbaren Daten dieser Bereiche des Druckbildes, insbesondere der Helligkeitsinformation, und den entsprechenden Spektraldaten der jeweiligen Farben in den vorgegebenen Bereichen hergestellt, sodass aus den über die tatsächliche Farbwiedergabe an sich nichts aussagenden Daten, die von der Kamera 14 erfasst werden, z.B. nur unterschiedliche Grautöne, die tatsächlichen Farbwerte im Druckbild errechnet werden können

Um Helligkeitsunterschiede gegenüber den vorgegebenen Helligkeitswerten am Druckbild 15 festzustellen, wird erfindungsgemäß nicht der Farbmesskopf 16, sondern die elektronische Kamera 14 verwendet, die vorzugsweise eine Zeilenkamera ist. Die Kamera 14 ist vorzugsweise als Farbkamera ausgebildet, sie kann aber auch eine Schwarz/Weiß-Kamera sein Im Falle einer Farbkamera ermittelt die Kamera 14 RGB-Werte (für Rot, Grün, Blau) in den jeweiligen Druckbereichen, wobei die Kamera 14 Helligkeitsveränderungen feststellen kann, die einer Variation der Schichtdicke der von den Druckwerken 1 bis 6 aufgebrachten Druckfarbe entsprechen

Im Falle einer Schwarz/Weiß-Kamera 14 können Helligkeitsveränderungen durch veränderte Grautöne in bestimmten Bereichen des Druckbildes festgestellt werden.

Die von der Kamera 14 fortlaufend gemessenen und überwachten Bereiche 15.1 und 15.2 des Druckbildes 15 auf der laufenden Druckbahn 11 werden in der Recheneinheit 17 oder in der Kamera 14 selbst mit den voreingestellten Helligkeitswerten bzw. Referenzwerten nach Ort und Zeit synchronisiert und verglichen. Wenn eine Veränderung festgestellt wird, wird daraus in der Recheneinheit anhand des Helligkeitsunterschieds die Änderung des entsprechenden Farbwertes errechnet Aus der Änderung des Farbwertes kann das entsprechende Druckwerk 1 bis 6 zur Veränderung der aufgedruckten Schichtdicke der Farbe entsprechend verstellt werden, um den Farbwert der aufgedruckten Farbe wieder an den voreingestellten Farbwert anzugleichen.

Beispielsweise ist im Speicher der Recheneinheit 17 bzw im Farbmesskopf 16 ein Lab-Farbwert von 10/10/10 z B für die Farbe Grau in einem vorgegebenen Bereich des Druckbildes 15 vorgegeben Ändert sich die von der Kamera 14 festgestellte Helligkeit der aufgedruckten Farbe Grau in diesem Bereich, so kann daraus ein veränderter Lab-Farbwert von z.B 10/10/9 errechnet werden, worauf die Beistellposition des betreffenden Druckwerkes 1 bis 6 entsprechend verändert werden kann, um wieder zu dem Farbwert 10/10/10 in dem vorgegebenen Bereich des Druckbildes 15 zu gelangen.

Die im Speicher als Bezugswerte hinterlegten Farbwerte werden vorzugsweise immer wieder während eines Druckvorganges der Druckmaschine vom Farbmesskopf ermittelt und an den Speicher weitergegeben zur Erneuerung der hinterlegten Farbbezugswerte. Dabei müssen auch die synchron erstellten Helligkeitswerte aus der Kamera im Speicher als Kamera- bzw. Helligkeitsbezugswerte bereitgestellt werden, die als Kombination die Systembezugswerte darstellen.

Die von der Kamera 14 ermittelten Daten, insbesondere Helligkeitswerte, werden mit den als Bezugsgröße hinterlegten Farbwerten, die Helligkeitswerte enthalten, verglichen und im Falle eines Unterschieds zwischen Bezugswert und von der Kamera festgestelltem Wert wird ein entsprechender Farbwert berechnet, der ggf. eine Farbabweichung gegenüber den Bezugswerten aufweist Dabei wird vorzugsweise ein Toleranzbereich des Unterschieds ΔE festgelegt, innerhalb dem Helligkeitsveränderungen in den Bezugsflächen des Druckbildes toleriert werden..

Die Zeilenkamera 14 nimmt das gesamte Druckbild 15 auf und prüft somit laufend, ob sich in den verschiedenen Bereichen des Druckbildes die Helligkeit gegenüber dem vorgegebenen Wert verändert. Hierbei wird vorzugsweise ein bestimmter Toleranzbereich eingestellt, innerhalb dem Helligkeitsschwankungen toleriert werden, ohne dass ein Signal an die Recheneinheit 17 und von dieser an die Einstelleinrichtungen der betreffenden Druckwerke 1 bis 6 gegeben wird.

Auf diese Weise kann mit den an einer Farbdruckmaschine in der Regel vorhandenen Einrichtungen wie Farbmesskopf 16 und Kamera 14 die Farbwiedergabe an dem auf der Druckbahn 11 aufgedruckten Druckbild 15 stetig ohne zeitliche Verzögerung überwacht und dann korrigiert werden, ohne dass der eigentliche Farbmesskopf 16 über den Bereich des Druckbildes 15 verfahren werden muss

Die derart generierten Ergebnisdaten entsprechen exakt dem Qualitätsniveau, auf dem der verwendete Farbmesskopf arbeitet.

Es wird mit den von der Kamera 14 aufgenommenen Daten eine Änderung des Farbwertes errechnet, ohne dass der Farbmesskopf 16 selbst die Farbmessung vornimmt. Die Kamera 14 dient als Hilfsgerät für den Farbmesskopf 16, der aufgrund seiner punktweisen Arbeitsweise ein Druckbild 15 nicht überwachen kann, das aber von der Kamera 14 ohne weiteres erfasst werden kann. Die Zeilenkamera 14 liefert kontinuierlich Helligkeitsinformationen bezüglich des gesamten Druckbildes.

Anstelle einer Zeilenkamera 14 kann auch eine andere elektronische Kamera zur Überwachung des Druckbildes 15 auf der Druckbahn 11 verwendet werden

Die von der Kamera 14 festgestellte Helligkeitsänderung im Druckbild 15 bzw. in Bereichen des Druckbildes kann unabhängig von der Errechnung einer entsprechenden Änderung des Farbwertes oder zusätzlich zu diesem zur Abgabe einer Warnmeldung an den Druckmaschinenführer verwendet werden.

Dadurch, dass für die Farbmessung eine Kombination von Farbmesskopf und elektronischer Kamera, insbesondere eine Zeilenkamera eingesetzt wird, kann die Farbmessung an laufenden Druckbahnen bis zu Bahngeschwindigkeiten von ca. 1.000 m/Min zur kontinuierlichen Farbinspektion eingesetzt werden. Hierbei sind ausreichend große homogene Farbbereiche oder Farbmarken am Druckbild 15 für eine zuverlässige Farbmessung zweckmäßig.

Bei der Druckmaschine kann es sich um eine Digitaldruck-, Tiefdruck-, Flexodruck- oder um eine Offset-Druckmaschine handeln. Fig. 1 zeigt als Beispiel schematisch eine Flexodruckmaschine.

Das beschriebene Verfahren ist nicht auf die Überwachung von Farbdruckbildem auf laufenden Druckbahnen beschränkt, es kann vielmehr auch an einem stationären Druckbild zur Farbmessung verwendet werden.

Die im Speicher hinterlegten Bezugswerte, die vom Farbmesskopf 16 generiert werden können, können auch von einer anderen Quelle vorgegeben werden, beispielsweise von einem Handfarbmessgerät

Für die Steuerung der Druckmaschine werden insbesondere Primärfarben in den Bezugsflächen des Druckbildes verwendet Es ist aber auch möglich, bei Sekundärund Tertiärfarben in einer Bezugsfläche eine Beziehung zwischen den von der Kamera 14 aufgenommenen Helligkeitsdaten und den im Speicher hinterlegten Bezugsfarbwerten herzustellen, weil sämtliche Farbinformationen der Primärfarben bei der Farbüberwachung der bunt aufgebauten Mischfarben berücksichtigt werden.

Die für das beschriebene Verfahren vorzugsweise verwendete Kamera ist eine Zeilenkamera, die im Falle einer Farbkamera mit drei Kanälen z.B. RGB für Rot, Grün, Blau und im Falle einer Schwarz-Weiß-Kamera mit nur einem Kanal arbeitet. Demgegenüber wird vorzugsweise ein Spektralfarbmesskopf 16 mit z.B. dreißig Spektralkanälen zum Erfassen der Farbwerte verwendet.

Der Spektralmesskopf enthält nicht nur einen Spektralsensor, sondern auch eine Beleuchtungseinrichtung, insbesondere ein Blitzlicht für die wiederkehrenden Bilder 15 auf der Druckbahn 11, wobei hohe Anforderungen an die Beleuchtung für eine exakte Farbmessung gestellt werden. Insgesamt ist der Farbmesskopf ein relativ aufwendiges Gerät.

Vorausgehend wurde die Kamera 14 als eine Kamera beschrieben, die das gesamte Druckbild 15 aufnimmt.. Es ist aber auch möglich, eine Kamera zu verwenden, die nur einen Teilbereich des Druckbildes aufnimmt, wobei die von der Kamera aufgenommenen Daten des Teilbereichs in der gleichen Weise wie beschrieben verarbeitet werden..

In der Praxis treten Schwankungen innerhalb von Beleuchtungsmodulen für die Zeilenkamera und sogar Inhomogenitäten innerhalb der Kamerazeile selbst auf. Beide Veränderungen werden erfindungsgemäß dadurch kompensiert, dass ausschließlich Farbflächen betrachtet werden, die mit der Kamera 14 und dem Farbmesskopf 16 analysiert werden.

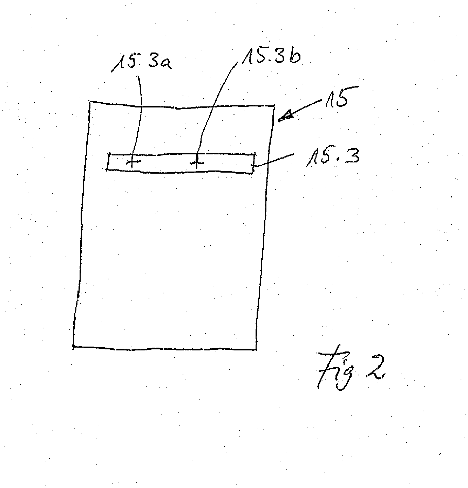

Fig. 2 zeigt schematisch z.B einen sich quer über das Druckbild 15 erstreckenden roten Balken 15.3. Der Farbmesskopf 16 misst beispielsweise auf der linken Seite an den Koordinaten des Punktes 15.3a den Farbwert und beispielsweise im Mittelbereich bei den Koordinaten des Punktes 15.3b. Wenn der rote Balken durchgehend mit der gleichen Farbe beziehungsweise Schichtdicke der Farbe gedruckt ist, sind die vom Farbmesskopf an den beiden Stellen gemessenen Farbwerte identisch Wenn dagegen mit der Zeilenkamera dieser rote Balken 15.3 aufgenommen wird, kann es sein, dass durch unterschiedlichen Winkel des einfallenden Beleuchtungslichtes oder andere innerhalb der Zeilenkamera vorhandene Inhomogenitäten die Zeilenkamera an den Koordinaten des Punktes 15.3a einen Helligkeitswert von beispielsweise 10 und an den Koordinaten des Punktes 15.3b einen Helligkeitswert von 9, also einen Unterschied in der Intensität der Farbe Rot an den beiden Stellen feststellt, obwohl an beiden Stellen die Farbe mit der gleichen Intensität gedruckt ist, wie der Farbmesskopf festgestellt hat.

In diesem Fall kann der Messwert der Zeilenkamera korrigiert beziehungsweise die Ungenauigkeit der Zeilenkamera anhand der vom Farbmesskopf generierten Farbbezugsdaten ausgeglichen werden.

Beim Verrechnen und Vergleichen der Daten der Zeilenkamera einerseits und der Daten des Farbmesskopfes andererseits werden diese hinsichtlich Zeit und Ort derart synchronisiert, dass jeweils die Daten des gleichen Ortes verglichen werden, wobei der Ort durch Koordinaten bestimmt ist, so dass auch der Ort innerhalb des von der Kamera aufgenommenen größeren Bildes genau festgelegt ist. Die Zeilenkamera sieht das gesamte Druckbild 15, das aus einer entsprechenden Anzahl von Zeilen zusammengesetzt ist, von denen eine Zeile in Laufrichtung beispielsweise 0,1 mm breit ist.

Der Farbmesskopf erfasst im Wesentlichen einen Punkt von beispielsweise 3 mm Durchmesser, so dass der vom Farbmesskopf erfasste Bereich 30 Zeilen der Zeilenkamera entspricht.

Es ist möglich, anstelle einer Zeilenkamera auch eine Flächenkamera zu verwenden, sofern die Ortsbestimmung bzw die Bestimmung der Koordinaten eines bestimmten Ortes für die Verrechnung der entsprechenden Messwerte möglich ist.

Es reicht an sich aus, wenn der Farbmesskopf einmal die Farbwerte eines optimalen Farbdruckes erfasst und diese Farbwerte als Bezugswerte hinterlegt werden Alle folgenden Messungen der Kamera 14 werden mit diesen Bezugswerten verglichen bzw verrechnet Es reicht somit für die laufende Farbmessung die Messung durch die Kamera 14 aus und es bedarf nicht einer dauernden Erneuerung der Bezugswerte durch den Farbmesskopf, auch wenn dieser in der Praxis gelegentlich die Farbewerte an vorgegebenen Positionen des Druckbildes überprüft.

Veränderungen am Druckbild werden an sich nur noch durch die Kamera ermittelt, sobald vom Farbmesskopf die Bezugswerte festgelegt sind.

Ein regelmäßiges Aktualisieren sämtlicher Systembezugswerte durch regelmäßige Einzelmessungen eines Inline-Farbmesskopfes ermöglicht ein kontinuierliches Erfassen und Exportieren von Farbwerten auf höchstem Qualitätsniveau, das dem Niveau des Farbmesskopfes zu 100% entspricht.

Insbesondere für den Digitaldruck mit seinen potentiell von Seite zu Seite wechselnden Motiven kann auch ein Druckkontrollstreifen mit den verschiedenen Farben als Messpositionen auf die Druckbahn 11 neben einem Druckbild 15 aufgedruckt werden, wobei dieser Druckkontrollstreifen als immer wiederkehrender identischer Bereich gedruckt wird, anhand dem eine Überwachung sämtlicher Farben möglich ist

Durch die erfindungsgemäße Kombination einer Zeilenkamera mit einem Farbmesskopf kann eine Zeilenkamera für die Farmessung eingesetzt werden, wobei die an der Zeilenkamera fehlenden Farbmessmöglichkeiten durch den Farbmesskopf ergänzt werden. Andererseits kann durch diese Kombination der an sich träge Farbmesskopf mit Hilfe der Zeilenkamera zu einer schnellen und kontinuierlichen Farbdatenmessung an beliebig vielen Bereichen verwendet werden, weil die Zeilenkamera die dem Farbmesskopf fehlende schnelle Beweglichkeit und die fehlende gleichzeitige Erfassung verschiedener Bereiche ersetzt.

## Patentansprüche

1. Verfahren zur Farbmessung an einem Druckbild, insbesondere einem auf einer laufenden Druckbahn wiederholt aufgedruckten Druckbild, umfassend eine elektronische Kamera (14) zum Aufnehmen des auf der Druckbahn (11) aufgedruckten Druckbildes (15),
eine Speicher- und Recheneinheit (17) zum Bereitstellen von Bezugsdaten der Farbwerte der im Druckbild vorhandenen Farben,
wobei die von der Kamera (14) aufgenommenen Daten, insbesondere Helligkeitsdaten, von vorbestimmten Bereichen des Druckbildes (15) in der Recheneinheit mit den gespeicherten Bezugsdaten der Farbwerte dieser Bereiche verglichen und/oder verrechnet werden

2. Verfahren nach Anspruch 1, wobei die Daten der Kamera (14) dazu verwendet werden, im Falle einer Differenz zwischen den von der Kamera gemessenen Daten und den Bezugsdaten ein Signal zur Anpassung der Druckwerke der Druckmaschine abzugeben.

3. Verfahren nach Anspruch 1 oder 2, wobei ein Farbmesskopf (16), insbesondere ein Spektralmesskopf, Farbwerte von den vorgegebenen Bereichen (15.1, 15.2) des Druckbildes (15) erfasst und im Speicher der Recheneinheit (17) als Bezugsdaten für den Vergleich und/oder die Verrechnung mit den von der Kamera (14) gelieferten Daten bereitstellt.

4. Verfahren nach einem der vorhergehenden Ansprüche, wobei die von der Kamera (14) aufgenommenen Daten der vorbestimmten Bereiche des Druckbildes (15) hinsichtlich Zeit und Ort mit den im Speicher bereitgestellten Bezugsdaten der Farbwerte dieser Bereiche synchronisiert werden

5. Verfahren nach einem der vorhergehenden Ansprüche, wobei als Kamera (14) eine Zeilenkamera verwendet wird.

6. Verfahren nach Anspruch 5, wobei die Zeilenkamera (14) als Farbkamera ausgebildet ist

7. Verfahren nach Anspruch 5, wobei die Zeilenkamera (14) als Schwarz-Weiß-Kamera ausgebildet ist.

8. Verfahren nach einem der vorhergehenden Ansprüche, insbesondere nach Anspruch 3, wobei die Kamera (14) fortlaufend Daten der an der Kamera vor beigeführten Druckbilder (15) aufnimmt und für eine Verarbeitung in der Recheneinheit (17) zur Verfügung stellt,
während die Bezugsdaten der vorgegebenen Bereiche eines Druckbildes (15) in zeitlichen Abständen vom Farbmesskopf (16) erneuert werden.

9. Verfahren nach einem der vorhergehenden Ansprüche, wobei als vorgegebene Bereiche bzw. Bezugsflächen (15.1, 15.2) in einem Druckbild (15) Bereiche mit Primärfarben verwendet werden.

10. Vorrichtung zur Farbmessung an einem Druckbild, insbesondere an auf einer laufenden Druckbahn aufgedruckten Druckbildern, umfassend eine elektronische Kamera (14) zur Aufnahme von zumindest Teilbereichen des Druckbildes (15),
einen Farbmesskopf (16) zum punktuellen Messen der Farbwerte von Farben im Druckbild (15) und
eine Speicher- und Recheneinheit (17), die von der Kamera (14) gelieferte Daten des Druckbildes (15) mit im Speicher der Recheneinheit vom Farbmesskopf (16) hinterlegten Farbwerten des Druckbildes (15) vergleicht bzw verrechnet und durch die örtliche Zuordnung der zu vergleichenden Daten aus den Daten der Kamera, insbesondere Helligkeitsdaten, die zugeordneten Farbwerte errechnet

11. Vorrichtung nach Anspruch 10, wobei der Farbmesskopf ein Spektralmesskopf (16) ist

12. Vorrichtung nach Anspruch 10 oder 11, wobei die elektronische Kamera (14) eine Zeilenkamera ist

13. Vorrichtung nach Anspruch 12, wobei die Zeilenkamera als Farbkamera ausgebildet ist

14. Vorrichtung nach Anspruch 12, wobei die Zeilenkamera als Schwarz-Weiß-Kamera ausgebildet ist
